# EUROPÄISCHE PATENTSCHRIFT

(11) **EP 0 622 180 B1**
(45) Veröffentlichungstag und Bekanntmachung des Hinweises auf die Patenterteilung: **02.06.1999**
(21) Anmeldenummer: 94106262.2
(22) Anmeldetag: 21.04.1994
(51) Int. Cl.: B32B 11/04, D06N 5/00, E01D 19/08

(54) **Bituminöse Dichtungsbahn**
Bituminous sealing web
Feuille d'étanchéité bitumineuse

(30) Priorität: 24.04.1993 DE 4313500
(43) Veröffentlichungstag der Anmeldung: 02.11.1994
(73) Patentinhaber: PHOENIX AKTIENGESELLSCHAFT, 21079 Hamburg (DE)
(72) Erfinder: von Holt, Dieter, Dipl.Ing., D-21244 Buchholz (DE); Schröder, Hans-Peter, D-21244 Buchholz (DE); Zeck, Horst, D-21244 Buchholz (DE)

(56) Entgegenhaltungen:
- EP-A- 0 447 876
- DE-A- 3 108 473
- DE-A- 3 341 682
- DE-A- 3 342 560

## Beschreibung

Die Erfindung betrifft eine mehrschichtige bituminöse Dichtungsbahn, insbesondere als Brücken-, Straßen- oder Parkdeckabdichtung, umfassend eine Trägerschicht, die zugleich Dichtschicht ist und aus einem bitumenbeständigen vernetzten Kautschuk auf der Basis von EPDM und/oder Butylkautschuk besteht, wobei die Trägerschicht zusätzlich mit einer Einlage aus Glasgelege oder Glasgewebe versehen ist.

Gattungsgemäße Dichtungsbahnen sind in den Offenlegungsschriften DE-A-31 08 473, DE-33 41 682 und DE-A-33 42 560 beschrieben, und zwar unter dem schwerpunktmäßigen Gesichtspunkt des Abdichtens von Dächern. Diese bewährten Dichtungsbahnen für das Abdichten von Dächern können jedoch als Brücken-, Straßen- oder Parkdeckabdichtungen nicht oder nur beschränkt eingesetzt werden.

Brückenabdichtungen werden unter Gußasphalt einlagig ausgeführt. Für die einlagige Abdichtung werden Bitumen-Schweißbahnen eingesetzt, die mit Aluminium-, Kupfer- oder Edelstahlbänder kaschiert sind.

Metall-Kaschierungen, beispielsweise Aluminium, sind nicht alkalibeständig. Spannungskorrosion in Verbindung mit Tausalz führt wiederum zur zerstörung der Kupfer-Kaschierung. Edelstahl-Kaschierungen sind zwar korrosionsbeständiger, aber sehr teuer. Außerdem können Metall-Kaschierungen zur Blasenbildung im Gußasphalt führen. Aus diesem Grunde werden teilweise schon Polymerbitumen-Schweißbahnen (EP-A-0 447 876) mit Trägereinlagen (Trägerschichten) aus synthetischem Faser- oder Vliesmaterial, beispielsweise Polyester, eingesetzt. Nachteilig bei diesen Trägereinlagen ist die größere thermische Empfindlichkeit. Beim Verlegen der Schweißbahnen kann es zu örtlichen überhitzungen kommen, die zu einem Wegschmelzen der Trägereinlage führen können.

Aufgabe der Erfindung ist es daher, eine bituminöse Dichtungsbahn zu entwickeln, die folgende Forderungen erfüllt:
1. Die Trägereinlage muß bitumenbeständig sein.
2. Zusätzliche Beschichtungen auf der Trägereinlage müssen eine gute Bitumenhaftung ermöglichen.
3. Starke Schwingungen und thermische sowie lastbedingte Schock-Beanspruchungen, auch bei tiefen Temperaturen (bis 35°C), muß die Trägereinlage schadlos aufnehmen.
4. Die Trägereinlage muß bei der Verarbeitung durch das Aufschweißen temperaturbeständig sein.
5. Hohe Korrosionsbeständigkeit der Trägereinlage muß gewährleistet sein.

Gelöst wird diese Aufgabe durch einen Schichtenaufbau gemäß Kennzeichen des Anspruchs 1.

Zweckmäßig Ausgestaltungen der Erfindung sind in den Ansprüchen 2 bis 15 genannt.

Die Erfindung wird nun anhand von zwei Ausführungsbeispielen unter Bezugnahme auf schematische Zeichnungen erläutert. Es zeigen:
- Fig. 1: eine Dichtungsbahn, bei der die Trägerschicht etwa in der Mitte angeordnet ist; sowie
- Fig. 2: eine Dichtungsbahn, bei der die Trägerschicht etwa im oberen Drittel angeordnet ist.

Im folgenden werden nun die einzelnen Schichten hinsichtlich ihrer chemischen Zusammensetzung wie auch ihrer Parameter (z.B. Dimensionsangaben) beschrieben.

### Schicht (1)

Diese Oberschicht (1) besteht aus einer Bitumen-Schweißmasse, die mit Styrol-Butadien-Styrol-Blockcopolymerisat (Kurzform: SBS) und/oder mit ataktischem Polypropylen (Kurzform: APP) modifiziert ist, wobei der Anteil an SBS und/oder APP 8 bis 20 Gew.-%, insbesondere 10 bis 15 Gew.-%, beträgt. Die Bitumen-Schweißmasse kann zusätzlich Füllstoffe enthalten.

Die Mindeststärke der Oberschicht ist 1 mm.

### Schicht (2)

Diese an die Oberschicht (1) unmittelbar angrenzende Haftschicht (2) besteht aus einem thermoplastischen Elastomer auf der Basis eines Gemisches aus Ethylen-Propylen-Dien-Mischpolymerisat (Kurzform: EPDM), SBS und Bitumen, wobei hinsichtlich SBS und EPDM zweckmäßigerweise folgende Zusammensetzung gilt und zwar in phr (Kurzform für per hundred rubber):
- SBS: 10 bis 90, insbesondere 20 bis 80,
- EPDM: 90 bis 10, insbesondere 80 bis 20.

Der Anteil dieser Polymerisate an der Gesamtmischung beträgt 20 bis 80 Gew.-%. Dieser Mischung können gegebenenfalls noch klebrig machende Harze beigefügt werden.

Die Mindeststärke der Haftschicht beträgt 0,1 mm

### Schicht (3)

Diese Trägerschicht (3), die zugleich Dichtschicht ist und an die Haftschicht (2) angrenzt, besteht aus einem bitumenbeständigen vernetzten Kauschuk auf Basis von EPDM und/oder Butylkautschuk, wobei der Anteil an vernetztem Kautschuk 20 bis 40 Gew.-%, insbesondere 25 bis 35 Gew.-%, beträgt. Bei dieser Mengenangabe ist die Einlage (7) nicht berücksichtigt.

Die Trägerschicht ist mit einer Einlage (7) aus Glasgelege oder Glasgewebe versehen, wobei die Einlage zweckmäßigerweise ein Gewicht von 50 bis 100 g/m², insbesondere 60 bis 70 g/m², besitzt.

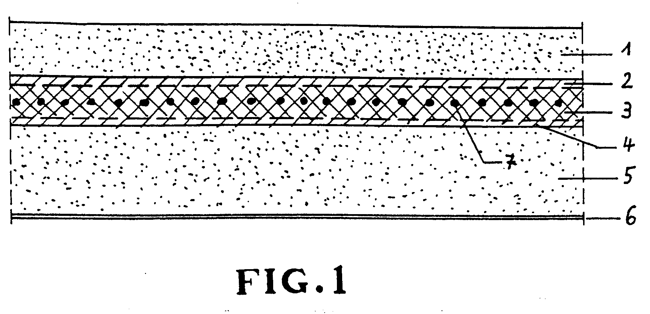

Die Mindeststärke der Trägerschicht (einschließlich Einlage) beträgt 1 mm. Diese Trägerschicht ist bei der Verwendung als Bautenabdichtung im Nicht-Brücken-Bereich etwa in der Mitte (bezogen auf die Gesamtstärke der Dichtungsbahn) angeordnet - Fig. 1. Bei Einsatz als Brückenabdichtung befindet sich die Trägerschicht dagegen im oberen Drittel - Fig. 2.

### Schicht (4)

Hinsichtlich der Haftschicht (4) gilt die gleiche chemische Zusammensetzung und Mindeststärke wie bei der Haftschicht (2). Die Haftschicht (4) ist dabei zwischen der Trägerschicht (3) und der Grundschicht (5) angeordnet.

### Schicht (5)

Die Grundschicht (5) besteht aus einer Bitumen-Schweißmasse, und zwar aus einem SBS-modifizierten Bitumen, wobei der Anteil an SBS 8 bis 20 Gew.-%, insbesondere 10 bis 15 Gew.-%, beträgt. Diese Schicht kann zusätzlich Füllstoffe enthalten.

Bei der Verwendung als Brückenabdichtung weist die Grundschicht eine Mindeststärke von 3 mm auf. Bei allen anderen Einsatzzwecken beträgt die Mindeststärke 2 mm.

### Schicht (6)

Die Grundschicht (5) ist mit einer Folie (Unterschicht 6) kaschiert, die insbesondere aus Polyester oder Polyethylen besteht.

Die Mindeststärke dieser Folie beträgt 5 µm.

Auch wenn der Einsatzschwerpunkt das Abdichten von Brücken, Straßen (überirdische und unterirdische Bauweise) und Parkdecks erfaßt, so ist die erfindungsgemäße Dichtungsbahn auch für den Schutz anderer Bauten (z.B. Tunnelbau, Schnellbahntrassen) geeignet.

## Patentansprüche

1. Mehrschichtige bituminöse Dichtungsbahn, insbesondere als Brücken-, Straßen- oder Parkdeckabdichtung, umfassend
- eine Trägerschicht (3), die zugleich Dichtschicht ist und aus einem bitumenbeständigen vernetzten Kautschuk auf der Basis von EPDM und/oder Butylkautschuk besteht, wobei die Trägerschicht zusätzlich mit einer Einlage (7) aus Glasgelege oder Glasgewebe versehen ist;
gekennzeichnet durch
- eine Oberschicht (1), bestehend aus einer Bitumen-Schweißmasse auf der Basis eines SBS- und/oder APP-modifizierten Bitumens, wobei der Anteil an SBS und/oder APP 8 bis 20 Gew.-% beträgt;
- eine Trägerschicht (3), deren Anteil an vernetztem Kautschuk 20 bis 40 Gew.-% beträgt;
- eine Grundschicht (5), bestehend aus einer Bitumen-Schweißmasse auf der Basis eines SBS-modifizierten Bitumens, wobei der Anteil an SBS 8 bis 20 Gew.-% beträgt;
- zwei Haftschichen (2,4), bestehend aus einem thermoplastischen Elastomer auf der Basis eines Gemisches von EPDM, SBS und Bitumen, wobei der Anteil an EPDM/SBS 20 bis 80 Gew.-% der Gesamtmischung beträgt, wobei ferner die Haftschichten beidseitig zur Trägerschicht (3) angeordnet sind und an die Oberschicht (1) bzw. an die Grundschicht (5) angrenzen; sowie
- eine an die Grundschicht (5) angrenzende Unterschicht (6), bestehend aus einer Folie.

2. Dichtungsbahn nach Anspruch 1, dadurch gekennzeichnet, daß bei der Oberschicht (1) der Anteil an SBS und/oder APP 10 bis 15 Gew.-% beträgt.

3. Dichtungsbahn nach Anspruch 1 oder 2, dadurch gekennzeichnet, daß die Mindeststärke der Oberschicht (1) 1 mm beträgt.

4. Dichtungsbahn nach einem der Ansprüche 1 bis 3, dadurch gekennzeichnet, daß bei der Trägerschicht (3) der Anteil an vernetztem Kautschuk 25 bis 35 Gew.-% beträgt.

5. Dichtungsbahn nach einem der Ansprüche 1 bis 4, dadurch gekennzeichnet, daß die Trägerschicht (3) eine Mindeststärke von 1 mm aufweist.

6. Dichtungsbahn nach einem der Ansprüche 1 bis 5, dadurch gekennzeichnet, daß die Trägerschicht (3) bei der Verwendung als Brückenabdichtung etwa im oberen Drittel (bezogen auf die Gesamtstärke der Dichtungsbahn) angeordnet ist.

7. Dichtungsbahn nach einem der Ansprüche 1 bis 5, dadurch gekennzeichnet, daß die Trägerschicht (3) bei der Verwendung als Bautenabdichtung im Nicht-Brücken-Bereich etwa in der Mitte (bezogen auf die Gesamtstärke der Dichtungsbahn) angeordnet ist.

8. Dichtungsbahn nach einem der Ansprüche 1 bis 7, dadurch gekennzeichnet, daß die Einlage (7) ein Gewicht von 50 bis 100 g/m², insbesondere 60 bis 70 g/m², besitzt.

9. Dichtungsbahn nach einem der Ansprüche 1 bis 8, dadurch gekennzeichnet, daß bei der Grundschicht (5) der Anteil an SBS 10 bis 15 Gew.-% beträgt.

10. Dichtungsbahn nach einem der Ansprüche 1 bis 9, dadurch gekennzeichnet, daß die Mindeststärke der Grundschicht (5) bei der Verwendung als Brückenabdichtung 3 mm beträgt.

11. Dichtungsbahn nach einem der Ansprüche 1 bis 9, dadurch gekennzeichnet, daß die Mindeststärke der Grundschicht (5) bei der Verwendung als Bautenschutz im Nicht-Brücken-Bereich 2 mm beträgt.

12. Dichtungsbahn nach einem der Ansprüche 1 bis 11, dadurch gekennzeichnet, daß bei den Haftschichten (2,4) hinsichtlich des Polymerisates auf Basis SBS/EPDM folgende Zusammensetzung gilt:
SBS 10 bis 90 phr, insbesondere 20 bis 80 phr,
EPDM 90 bis 10 phr, insbesondere 80 bis 20 phr.

13. Dichtungsbahn nach einem der Ansprüche 1 bis 12, dadurch gekennzeichnet, daß die Mindeststärke der Haftschichten (2, 4) 0,1 mm beträgt.

14. Dichtungsbahn nach einem der Ansprüche 1 bis 13, dadurch gekennzeichnet, daß die Folie aus Polyester oder Polyethylen besteht.

15. Dichtungsbahn nach einem der Ansprüche 1 bis 14, dadurch gekennzeichnet, daß die Folie eine Mindeststärke von 5 µm aufweist.

## Claims

1. A multi-layer bituminous sealing-sheet, especially as a deck seal for bridges, road or parking areas, comprising
- one carrier-layer (3) which at the same time is a sealing-layer and consists of a bitumen-resistant cross-linked rubber, on the basis of EPDM and/or butyl rubber, the carrier-layer being provided in addition with an inlay (7) of glass spawn or glass tissue;
characterised by
- one upper-layer (1) consisting of a bituminous welding composition, on the basis of a SBS- and/or APP-modified bitumen, in which the proportion of SBS and/or APP amounts to from 8 to 20% by wt.;
- one carrier-layer (3) in which the proportion of cross-linked rubber amounts to from 20 to 40% by wt.;
- one foundation-layer (5) consisting of a bituminous welding composition on the basis of a SBS-modified bitumen, in which the proportion of SBS amounts to from 8 to 20% by wt.;
- two adhesive layers (2, 4) consisting of a thermoplastic elastomer on the basis of a mixture of EPDM, SBS and bitumen, in which the proportion of EPDM/SBS in the whole mixture amounts to from 20 to 80% by wt., and further the adhesive layers are arranged on opposite sides of the carrier-layer (3) and adjoin the upper layer (1) and foundation-layer respectively; as well as
- an underlayer (6) consisting of a foil next to the foundation-layer (5),

2. A sealing-sheet as Claim 1, characterised in that in the upper layer (1) the proportion of SBS and/or APP amounts to from 10 to 15% by wt.

3. A sealing-sheet as in Claim 1 or 2, characterised in that the minimum thickness of the upper layer (1) amounts to 1 mm.

4. A sealing-sheet as in one of the Claims 1 to 3, characterised in that in the carrier-layer (3) the proportion of cross-linked rubber amounts to from 25 to 35% by wt.

5. A sealing-sheet as in one of the Claims 1 to 4, characterised in that the carrier-layer (3) exhibits a minimum thickness of 1 mm.

6. A sealing-sheet as in one of the Claims 1 to 5, characterised in that in the event of the employment of the sealing-sheet for the water-proofing of bridges the carrier layer (3) is arranged in about the upper third (referred to the total thickness of the sealing-sheet).

7. A sealing-sheet as in one of the Claims 1 to 5, characterised in that in the event of the employment of the sealing-sheet for the water-proofing of structures in the non-bridge range the carrier-layer (3) is arranged in about the middle (referred to the total thickness of the sealing-sheet).

8. A sealing-sheet as in one of the Claims 1 to 7, characterised in that the inlay (7) has a weight of from 50 to 100 g/m², especially from 60 to 70 g/m².

9. A sealing-sheet as in one of the Claims 1 to 8, characterised in that in the foundation-layer (5) the proportion of SBS amounts to from 10 to 15% by wt.

10. A sealing-sheet as in one of the Claims 1 to 9, characterised in that in the event of the employment of the sealing-sheet for the water-proofing of bridges the minimum thickness of the foundation-layer (5) amounts to 3 mm.

11. A sealing-sheet as in one of the Claims 1 to 9, characterised in that in the event of the employment of the sealing-sheet for the water-proofing of structures in the non-bridge range the minimum thickness of the foundation-layer (5) amounts to 2 mm.

12. A sealing-sheet as in one of the Claims 1 to 11, characterised in that the adhesive layers (2, 4) as regards the polymeride on the basis of SBS/EPDM the following composition holds:
SBS from 10 to 90 % rubber, especially from 20 to 80 % rubber;
EPDM from 90 to 10 % rubber, especially from 80 to 20 % rubber.

13. A sealing-sheet as in one of the Claims 1 to 12, characterised in that the minimum thickness of the adhesive layers (2, 4) amounts to 0.1 mm.

14. A sealing-sheet as in one of the Claims 1 to 13, characterised in that the foil consists of polyester or polyethylene.

15. A sealing-sheet as in one of the claims 1 to 14, characterised in that the foil exhibits a minimum thickness of 5 µm.

## Revendications

1. Feuille d'étanchéité bitumineuse multicouches, en particulier en tant que matière d'étanchéité de pont, de route ou de couverture de parking, comprenant
- une couche support (3), qui constitue en même temps une couche d'étanchéité et qui est constituée d'un caoutchouc réticulé résistant au bitume à base de EPDM et/ou de caoutchouc butylé, la couche support étant munie de plus d'un revêtement (7) de dépôt de verre ou de tissu de verre;
caractérisée en ce que,
- une couche supérieure (1), constituée d'une masse a souder bitumineuse à base d'un bitume modifié par un SBS et/ou un APP, dans laquelle la proportion en SBS et/ou en APP est de 8 à 20% en poids;
- une couche support (3), dont la proportion en caoutchouc réticulé est de 20 à 40% en poids;
- une couche de base (5), constituée d'une masse a souder bitumineuse à base d'un bitume modifié par SBS, dans laquelle la proportion en SBS est de 8 à 20% en poids;
- deux couches d'adhérence (2, 4), constituées d'un élastomère thermoplastique à base d'un mélange de EPDM, SBS et de bitume, la proportion en EPDM/SBS étant de 20 à 80% en poids du mélange total, les couches d'adhérence étant de plus disposées des deux côtés de la couche support (3) et délimitent la couche supérieure (1) respectivement la couche de base (5);
- ainsi qu'une sous-couche (6) délimitant la couche de base (5), constituée d'une feuille.

2. Feuille d'étanchéité selon la revendication 1, caractérisée en ce que dans la couche supérieure (1) la proportion en SBS et/ou en APP est de 10 à 15% en poids.

3. Feuille d'étanchéité selon la revendication 1 ou 2, caractérisée en ce que l'épaisseur minimale de la couche supérieure (1) est de 1 mm.

4. Feuille d'étanchéité selon l'une quelconque des revendications 1 à 3, caractérisée en ce que dans la couche support (3), la proportion en caoutchouc réticulé est de 25 à 35% en poids.

5. Feuille d'étanchéité selon l'une quelconque des revendications 1 à 4, caractérisée en ce que la couche support (3) présente une épaisseur minimale de 1 mm.

6. Feuille d'étanchéité selon l'une quelconque des revendications 1 à 5, caractérisée en ce que la couche support (3) est disposée approximativement dans le tiers supérieur (par rapport à l'épaisseur totale de la feuille d'étanchéité lors de sa mise en oeuvre en tant que matière d'étanchéité de pont).

7. Feuille d'étanchéité selon l'une quelconque des revendications 1 à 5, caractérisée en ce que la couche support (3) est disposée approximativement au milieu (par rapport à l'épaisseur totale de la feuille d'étanchéité) lors de sa mise en oeuvre en tant que matière d'étanchéité pour la construction dans le domaine excluant les ponts.

8. Feuille d'étanchéité selon l'une quelconque des revendications 1 à 7, caractérisée en ce que le revêtement possède un grammage de 50 à 100 g/m², en particulier de 60 à 70 g/m².

9. Feuille d'étanchéité selon l'une quelconque des revendications 1 à 8, caractérisée en ce que pour la couche de base (5), la proportion en SBS est de 10 à 15% en poids.

10. Feuille d'étanchéité selon l'une quelconque des revendications 1 à 9, caractérisée en ce que l'épaisseur minimale de la couche de base (5) est de 3 mm lors de sa mise en oeuvre en tant que matière d'étanchéité de pont.

11. Feuille d'étanchéité selon l'une quelconque des revendications 1 à 9, caractérisée en ce que l'épaisseur minimale de la couche de base (5) est de 2 mm lors de sa mise en oeuvre en tant que protection des constructions dans le domaine excluant les ponts.

12. Feuille d'étanchéité selon l'une quelconque des revendications 1 à 11, caractérisée en ce que, dans les couches d'adhérence (2, 4), en ce qui concerne le polymérisat à base de SBS/EPDM, la composition suivante est valable:
SBS 10 à 90 phr, en particulier 20 à 80 phr,
EPDM 90 à 10 phr, en particulier 80 à 20 phr.

13. Feuille d'étanchéité selon l'une quelconque des revendications 1 à 12, caractérisée en ce que l'épaisseur minimale des couches d'adhérence (2, 4) est de 0,1 mm.

14. Feuille d'étanchéité selon l'une quelconque des revendications 1 à 13, caractérisée en ce que la feuille est constituée de polyester ou de polyéthylène.

15. Feuille d'étanchéité selon l'une quelconque des revendications 1 à 14, caractérisée en ce que la feuille présente une épaisseur minimale de 5 µm.
